# EUROPÄISCHE PATENTSCHRIFT

(11) **EP 3 072 378 B1**
(45) Veröffentlichungstag und Bekanntmachung des Hinweises auf die Patenterteilung: **24.01.2018**
(21) Anmeldenummer: 16156893.6
(22) Anmeldetag: 23.02.2016
(51) Int. Cl.: A01D 41/127

(54) **KÖRNERSTROMSENSORANORDNUNG FÜR EINEN MÄHDRESCHER**
GRAIN FLOW SENSOR ASSEMBLY FOR A COMBINE HARVESTER
SYSTÈME CAPTEUR DE FLUX DE GRAINS POUR MOISSONNEUSE-BATTEUSE

(30) Priorität: 24.03.2015 DE 102015205310
(43) Veröffentlichungstag der Anmeldung: 28.09.2016
(73) Patentinhaber: Deere & Company, Moline, IL 61265 (US)
(72) Erfinder: Hess, Wolfgang, 66877 Ramstein (DE)
(74) Vertreter: Holst, Sönke

(56) Entgegenhaltungen:
- EP-A2- 2 742 791
- DE-A1- 19 618 042
- DE-A1-102005 050 751

## Beschreibung

Die Erfindung betrifft eine Körnerstromsensoranordnung für einen Mähdrescher und einen Mähdrescher.

### Stand der Technik

Landwirtschaftliche Mähdrescher werden bei der Ernte von Körnerfrüchten eingesetzt, um auf einem Feld angebaute Pflanzen zu ernten und zu dreschen. Das ausgedroschene Erntegut wird anschließend noch durch eine Trenneinrichtung bearbeitet. Das im Dresch- und Trennprozess gewonnene Korn wird in einer Reinigungseinrichtung gereinigt und in einem Korntank abgelegt, aus dem es schließlich auf ein Transportfahrzeug überladen wird.

Zur optimalen Einstellung von Arbeitsparametern der Dresch- und Trenneinrichtung bzw. der Reinigungseinrichtung und/oder zur Vorgabe der Vortriebsgeschwindigkeit des Mähdreschers, die den Durchsatz bestimmt, verwendet man so genannte Verlustkornsensoren, die am Auslass der jeweiligen Einrichtung angeordnete Prallplatten mit Schwingungssensoren umfassen. Auf die Prallplatte aufprallende Körner erzeugen Schwingungen, die mit dem Schwingungssensor erfasst und durch eine Auswertungsschaltung ausgewertet werden. Die Signale der Auswertungsschaltung dienen zur Ansteuerung einer Verlustanzeige und/oder zur selbsttätigen Einstellung der Vortriebsgeschwindigkeit bzw. von Arbeitsparametern der Dresch- und/oder Trenneinrichtung und/oder der Reinigungseinrichtung (vgl. beispielsweise DE 10 2013 201 618 A1).

Üblicherweise ist ein Verlustkornsensor rückwärtig des hinteren Endes des Obersiebs der Reinigungseinrichtung angeordnet, sodass vom Obersieb nach hinten und unten fallende Verlustkörner durch einen Fingerrechen auf die dort angeordnete Prallplatte fallen. Durch an der Oberseite des Obersiebs angebrachte Leitbleche, die das Erntegut seitlich zusammenführen, kann erreicht werden, dass auch beim Befahren von Seitenhängen noch Erntegut auf die Prallplatte fällt (vgl. EP 2 005 813 A1). Die US 4 517 792 A zeigt einen Verlustkornsensor mit einer rückwärtig und unterhalb der hinteren Kante des Obersiebs unter einem Fingerrechen nach hinten und unten geneigt angebrachten Prallplatte und einer darüber und dahinter angeordneten, etwa vertikalen und in sich flachen Reflektorplatte, die die Verlustkörner auf die Prallplatte lenken soll. In der EP 2 742 791 A2 wird ein Mähdrescher mit Verlustsensoren gezeigt, die unterhalb des rückwärtigen Endes eines Strohschüttlers und eines Obersiebes einer Reinigung positioniert sind.

Körnerstromsensoren werden zudem verwendet, um die Abscheidung von Körnern in einer Dresch-, Trenn- oder Reinigungseinrichtung zu erfassen (DE 40 35 471 A1, EP 1 162 872 A1, DE 195 06 059 A1), die ebenfalls zur selbsttätigen Einstellung von Arbeitsparametern der Dresch- und/oder Trenn- und/oder der Reinigungseinrichtung genutzt wird. Die Körnerstromsensoren sind an der zu untersuchenden Stelle der Dresch-, Trenn- oder Reinigungseinrichtung angeordnet. Letztere gibt die Körner im freien Flug ab und der Sensor erhält nur die direkt gegen ihn prallenden Körner.

Die im Stand der Technik bekannten, rückwärtig der Reinigungseinrichtung angebrachten Verlustkornsensoren erfassen somit nur die Verlustkörner, die an der rückwärtigen Kante der Reinigungseinrichtung unmittelbar nach unten fallen. Ein wesentlich größerer Anteil der Verlustkörner wird jedoch im Luftstrom der Reinigungseinrichtung mit nach hinten getragen, wo er direkt oder durch einen Spreuverteiler auf den Feldboden gelangt. Die Verlustkornsensoren liefern demnach nur relativ geringe und somit ungenaue Zählraten. Analog sind auch die Zählraten der Körnerstromsensoren zur Erfassung der Abscheidung der Dresch- und/oder Trenn- und/oder der Reinigungseinrichtung begrenzt.

### Aufgabe der Erfindung

Die der Erfindung zu Grunde liegende Aufgabe wird darin gesehen, eine Körnerstromsensoranordnung für einen Mähdrescher bereitzustellen, bei der die erwähnten Probleme zumindest teilweise vermieden werden können.

### Lösung

Die vorliegende Erfindung wird durch die Patentansprüche definiert.

Eine Körnerstromsensoranordnung für einen Mähdrescher, der eine Erntegutbearbeitungseinrichtung umfasst, die im Erntebetrieb im Erntebetrieb einen frei fliegenden (d.h. nicht auf einem Förderer liegenden, sondern sich in der Luft bewegenden) Strom von Körnern abgibt, ist mit einer Körnererfassungseinrichtung sowie einem zum Umlenken von Körnern auf die Körnererfassungseinrichtung hin ausgelegten Ablenkelement versehen, das innerhalb des Stroms der Körner angeordnet ist und eine die Körner auf die Körnererfassungseinrichtung hin reflektierende und konzentrierende, konkave (z.B. kreis- oder parabelförmige) Form aufweist.

Mit anderen Worten wird innerhalb des von der Erntegutbearbeitungseinrichtung abgegebenen, frei durch die Luft fliegenden Körnerstroms ein die Körner auf die Körnererfassungseinrichtung hin reflektierendes und konzentrierendes Ablenkelement angebracht. Die Körnererfassungseinrichtung wird demnach durch eine wesentlich höhere Anzahl an Körnern getroffen, was zu höheren und genaueren Nachweisraten als bei bisherigen Körnerstromsensoren führt. Die Körner werden durch die Körnererfassungseinrichtung erfasst, deren Ausgangssignal zu den eingangs erwähnten Zwecken verwendet werden kann.

Die Körnererfassungseinrichtung umfasst vorzugsweise eine Prallfläche, auf welche die vom Ablenkelement reflektierten Körner prallen und einen Schwingungssensor zum Nachweis auf die Prallfläche aufprallender Körner. Bei einer anderen Ausführungsform könnte auch eine Kamera oder eine Lichtschranke als Körnererfassungseinrichtung verwendet werden.

Die Erntegutbearbeitungseinrichtung ist insbesondere eine Reinigungseinrichtung mit einem Gebläse und einem Obersieb und das Ablenkelement ist rückwärtig des Obersiebs angeordnet. Es wäre auch denkbar, das Ablenkelement einer Dresch- oder Trenntrommel (vgl. DE 40 35 471 A1, EP 1 162 872 A1 oder DE 195 06 059 A1) benachbart anzubringen, die Körner im freien Flug abgibt, um den Körnerstrom durch das Ablenkelement auf die Prallplatte zu konzentrieren.

Das Ablenkelement weist insbesondere eine horizontale Achse der Konkavität auf, die sich parallel zur rückwärtigen Kante der Erntegutbearbeitungseinrichtung erstreckt, während die Prallfläche sich vor dem Ablenkelement befindet. Die Prallfläche kann unterhalb der Achse der Konkavität des Ablenkelements liegen.

### Ausführungsbeispiel

In den Zeichnungen ist ein nachfolgend näher beschriebenes Ausführungsbeispiel der Erfindung dargestellt, wobei die Bezugszeichen nicht zur einschränkenden Auslegung herangezogen werden sollen. Es zeigt:
- Fig. 1: eine schematische seitliche Ansicht eines Mähdreschers mit einem Körnerstromsensor, und
- Fig. 2: einen vergrößerten Ausschnitt aus der Figur 1.

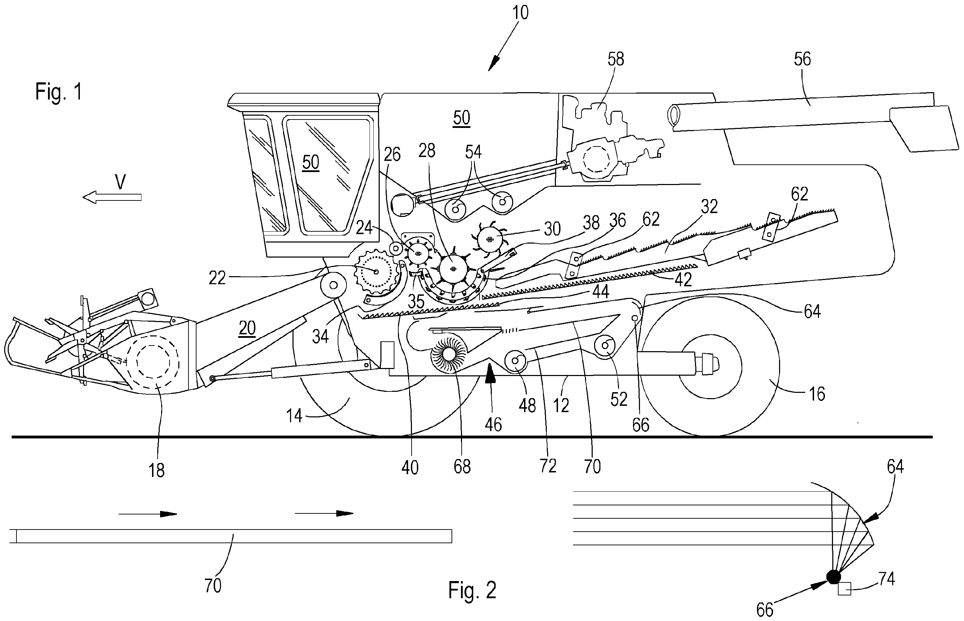

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Unterhalb des Mehrtrommeldreschwerks befindet sich ein vorderer Förderboden 40, der im Betrieb in eine abwechselnd nach vorn und hinten gerichtete Schwingbewegung durchführt. Ein hinterer Förderboden 42 ist unterhalb des Strohschüttlers 32 angeordnet und vollführt im Betrieb ebenfalls eine abwechselnd nach hinten und vorn gerichtete Schwingbewegung. Der vordere Förderboden 40 transportiert das durch den Dreschkorb 34 und durch den Tangentialseparator 36 nach unten hindurch tretende Gemisch aus Körnern und Spreu nach hinten, während der hintere Förderboden 42 das durch den Strohschüttler 32 hindurch strömende Gemisch aus Körnern und Spreu nach vorn transportiert. Der hintere Förderboden 42 übergibt sein Gemisch an seinem vorderen Ende an den vorderen Förderboden 40, der es durch einen rückwärtigen Fingerrechen 44 nach unten abgibt. Das vom vorderen Förderboden 40 abgegebene Gemisch gelangt dann in eine Reinigungseinrichtung 46, die in der Figur 2 detaillierter dargestellt ist.

Durch die Reinigungseinrichtung 46 gereinigte Körner werden mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Der Strohschüttler 32 ist durch angetriebene Kurbelwellen 62 am Rahmen 12 abgestützt.

Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden. Es ist aber auch denkbar, einen rotierenden Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden.

Die Reinigungseinrichtung 46 umfasst ein Gebläse 68, ein Obersieb 70 und ein darunter angeordnetes Untersieb 72. Das Obersieb 70 wird von unten und vorn her durch das Gebläse 68 mit einem Luftstrom beaufschlagt, der durch Öffnungen des Obersiebes 70 nach oben und hinten hin strömt. Das Obersieb 70 wird durch den vorderen Förderboden 40 mit dem Gemisch aus Körnern und Spreu beaufschlagt. Das Obersieb 70 wird, wie das Untersieb 72, durch einen Exzentertrieb in eine Schwingbewegung versetzt. Das Gemisch wird somit gereinigt, fällt auf das ebenfalls mit dem Luftstrom des Gebläses 68 beaufschlagte Untersieb 72 und die gereinigten Körner gelangen dann zur Körnerschnecke 48, während die Überkehr am rückwärtigen Ende des Untersiebs 72 zur Überkehrschnecke 52 gelangt. An der Rückseite des Obersiebs 70 werden die Spreu und darin enthaltene Verlustkörner durch den Luftstrom des Gebläses 68 nach hinten abgegeben und können schließlich durch einen rotierenden Spreuverteiler auf das Feld ausgeworfen werden oder sie werden durch einen stromab des Strohschüttlers 32 angeordneten Strohhäcksler (nicht eingezeichnet) auf das Feld ausgetragen.

Das Obersieb 70 gibt an seiner Rückseite demnach einen freien, luftgetragenen Strom von Spreu und (Verlust-) Körnern ab. Bisherige Verlustkornsensoren sind unterhalb des rückwärtigen Endes des Obersiebs 70 angeordnet und erhalten nur die direkt sie fallenden Körner, was zu relativ geringen Zählraten führt. Entsprechend der vorliegenden Erfindung ist, wie in der Figur 2 dargestellt, in dem freien Strom der Körner ein konkaves (insbesondere kreis- oder parabelförmiges) Ablenkelement 64 angebracht, das die Körner reflektiert und auf eine Prallfläche 66 hin konzentriert. Das Ablenkelement 64 hat eine Achse der Konkavität, die sich horizontal und rückwärtig des hinteren Endes des Obersiebs 70 befindet. Die innerhalb der Brennebene des Ablenkelements 64 angeordnete Prallfläche 66 befindet sich vor dem Ablenkelement 64 und darunter. Ein Schwingungssensor 74, der auch in die Prallfläche 66 integriert werden könnte, erfasst mechanische bzw. akustische Schwingungen, die von aufprallenden Körnern an der Prallfläche erzeugt werden. Der Schwingungssensor 74 ist mit einer nicht gezeigten Nachweiselektronik verbunden, deren Signale wiederum in an sich bekannter und deshalb hier nicht im Detail beschriebener Weise zur Ansteuerung einer Verlustanzeige und/oder zur selbsttätigen Einstellung der Vortriebsgeschwindigkeit bzw. von Arbeitsparametern der Dresch- und/oder Trenneinrichtung und/oder der Reinigungseinrichtung dienen. Die Prallfläche 66 und der Schwingungssensor 74 dienen somit hier als Beispiel für eine Körnererfassungseinrichtung.

Die vom Ablenkelement 64 nach unten und vorn hin reflektierten Körner und Spreu können direkt auf das Feld fallen oder sie werden zur Überkehrschnecke 52 geleitet, wie in der Figur 1 gezeigt.

Die Prallfläche 66 und das Ablenkelement 64 können sich über die gesamte Breite des Obersiebs 70 oder einen Teil davon erstrecken. Im zweiten Fall können mehrere Prallflächen 66 und Ablenkelemente 64 seitlich nebeneinander angeordnet sein, um die seitliche Verteilung der Erntegutverluste erfassen zu können.

Weiterhin kann das Ablenkelement 64 nur um seine quer zur Zeichenebene der Figuren 1 und 2 und quer zur Vorwärtsrichtung des Mähdreschers 10 verlaufende Achse der Konkavität gekrümmt sein, während es entlang seiner Achse der Konkavität nicht gekrümmt, d.h. in sich flach ist, oder es kann auch quer zur Vorwärtsrichtung konkav geformt sein, um die Körner auch in seitlicher Richtung und somit in einer mehr oder weniger punktförmigen Stelle auf der Prallfläche 66 zu konzentrieren.

Die Prallfläche 66 kann, wie dargestellt, einen kreisförmigen Querschnitt aufweisen oder kreisbogenförmig gestaltet sein. Sie kann als hohles oder massives Element ausgeführt werden. Es wäre auch denkbar, sie in sich flach zu gestalten.

## Patentansprüche

1. Mähdrescher (10) mit einer Körnerstromsensoranordnung, wobei der Mähdrescher (10) eine Erntegutbearbeitungseinrichtung umfasst, die im Erntebetrieb einen frei fliegenden Strom von Körnern abgibt, und die Körnerstromsensoranordnung mit einer Körnererfassungseinrichtung sowie einem zum Umlenken von Körnern auf die Körnererfassungseinrichtung hin angeordneten Ablenkelement (64) versehen ist, **dadurch gekennzeichnet, dass** das Ablenkelement (64) innerhalb des frei fliegenden Stroms der Körner angeordnet ist und eine die Körner auf die Körnererfassungseinrichtung hin reflektierende und konzentrierende, konkave Form aufweist.

2. Mähdrescher (10) nach Anspruch 1, wobei die Körnererfassungseinrichtung eine Prallfläche (66) und einen Schwingungssensor (74) zum Nachweis auf die Prallfläche (66) aufprallender Körner umfasst.

3. Mähdrescher (10) nach Anspruch 1 oder 2, wobei die von der Erntegutbearbeitungseinrichtung derart konfiguriert ist, dass die von ihr abgegebenen Körner in einem Luftstrom getragen sind.

4. Mähdrescher (10) nach Anspruch 3, wobei die Erntegutbearbeitungseinrichtung eine Reinigungseinrichtung (46) mit einem Gebläse (68) und einem Obersieb (70) ist und das Ablenkelement (64) rückwärtig des Obersiebs (70) angeordnet ist.

5. Mähdrescher (10) nach Anspruch 4, wobei das Ablenkelement (64) eine horizontale Achse der Konkavität aufweist, die sich parallel zur rückwärtigen Kante des Obersiebs (70) erstreckt und die Prallfläche (66) sich vor dem Ablenkelement (64) befindet.

6. Mähdrescher (10) nach Anspruch 5, wobei sich die Prallfläche (66) unterhalb der Achse der Konkavität des Ablenkelements (64) befindet.

7. Mähdrescher (10) nach einem der vorhergehenden Ansprüche, wobei das Ablenkelement (64) kreis- oder parabelförmig ist.

8. Mähdrescher (10) nach einem der vorhergehenden Ansprüche, wobei das Ablenkelement (64) in einer oder zwei Richtungen konkav ist.

9. Mähdrescher (10) nach einem der vorhergehenden Ansprüche, wobei sich das Ablenkelement (64) über die gesamte Breite der Erntegutbearbeitungseinrichtung erstreckt oder sich das Ablenkelement (64) nur über einen Teil der Breite der Erntegutbearbeitungseinrichtung erstreckt und mehrere Ablenkelemente (64) und Körnererfassungseinrichtungen über die Breite der Erntegutbearbeitungseinrichtung verteilt sind.

## Claims

1. Combine harvester (10) with a grain flow sensor assembly, wherein the combine harvester (10) comprises a crop-processing device which, in the harvesting mode, outputs a freely flying flow of grains, and the grain flow sensor assembly is provided with a grain-detecting device and with a deflecting element (64) which is arranged for deflecting grains towards the grain-detecting device, **characterized in that** the deflecting element (64) is arranged within the freely flying flow of the grains and has a concave shape reflecting and concentrating the grains towards the grain-detecting device.

2. Combine harvester (10) according to Claim 1, wherein the grain-detecting device comprises an impact surface (66) and a vibration sensor (74) for detecting grains impacting against the impact surface (66).

3. Combine harvester (10) according to Claim 1 or 2, wherein the of the crop-processing device is configured in such a manner that the grains output by the latter are carried in an airflow.

4. Combine harvester (10) according to Claim 3, wherein the crop-processing device is a cleaning device (46) with a fan (68) and an upper sieve (70), and the deflecting element (64) is arranged to the rear of the upper sieve (70).

5. Combine harvester (10) according to Claim 4, wherein the deflecting element (64) has a horizontal axis of the concavity, which axis extends parallel to the rearward edge of the upper sieve (70), and the impact surface (66) is located in front of the deflecting element (64).

6. Combine harvester (10) according to Claim 5, wherein the impact surface (66) is located below the axis of the concavity of the deflecting element (64).

7. Combine harvester (10) according to one of the preceding claims, wherein the deflecting element (64) is circular or parabolic.

8. Combine harvester (10) according to one of the preceding claims, wherein the deflecting element (64) is concave in one or two directions.

9. Combine harvester (10) according to one of the preceding claims, wherein the deflecting element (64) extends over the entire width of the crop-processing device, or the deflecting element (64) extends only over part of the width of the crop-processing device, and a plurality of deflecting elements (64) and grain-detecting devices are distributed over the width of the crop-processing device.

## Revendications

1. Moissonneuse-batteuse (10) avec un système capteur de flux de grains, dans laquelle la moissonneuse-batteuse (10) comprend un dispositif de traitement de récolte qui en fonctionnement de récolte délivre un flux de grains volant librement, et le système capteur de flux de grains est muni d'un dispositif de détection des grains ainsi que d'un élément de déviation (64) disposé de façon à dévier les grains en direction du dispositif de détection des grains, **caractérisée en ce que** l'élément de déviation (64) est disposé à l'intérieur du flux de grains volant librement et présente une forme concave réfléchissant et concentrant les grains en direction du dispositif de détection des grains.

2. Moissonneuse-batteuse (10) selon la revendication 1, dans laquelle le dispositif de détection des grains comprend une face d'impact (66) et un capteur de vibrations (74) pour la détection de grains frappant la face d'impact (66).

3. Moissonneuse-batteuse (10) selon la revendication 1 ou 2, dans laquelle la par le dispositif de traitement de récolte est configurée de telle manière que les grains délivrés par celui-ci soient portés dans un courant d'air.

4. Moissonneuse-batteuse (10) selon la revendication 3, dans laquelle le dispositif de traitement de récolte est un dispositif de nettoyage (46) avec une soufflante (68) et un tamis supérieur (70) et l'élément de déviation (64) est disposé à l'arrière du tamis supérieur (70).

5. Moissonneuse-batteuse (10) selon la revendication 4, dans laquelle l'élément de déviation (64) présente un axe horizontal de la concavité, qui s'étend parallèlement au côté arrière du tamis supérieur (70) et la face d'impact (66) se trouve devant l'élément de déviation (64).

6. Moissonneuse-batteuse (10) selon la revendication 5, dans laquelle la face d'impact (66) se trouve en dessous de l'axe de la concavité de l'élément de déviation (64).

7. Moissonneuse-batteuse (10) selon l'une quelconque des revendications précédentes, dans laquelle l'élément de déviation (64) est de forme circulaire ou parabolique.

8. Moissonneuse-batteuse (10) selon l'une quelconque des revendications précédentes, dans laquelle l'élément de déviation (64) est concave dans une ou dans deux direction(s).

9. Moissonneuse-batteuse (10) selon l'une quelconque des revendications précédentes, dans laquelle l'élément de déviation (64) s'étend sur toute la largeur du dispositif de traitement de récolte ou l'élément de déviation (64) ne s'étend que sur une partie de la largeur du dispositif de traitement de récolte et plusieurs éléments de déviation (64) et plusieurs dispositifs de détection des grains sont répartis sur la largeur du dispositif de traitement de récolte.
